# EUROPÄISCHE PATENTANMELDUNG

(11) **EP 0 748 581 A1**
(43) Veröffentlichungstag der Anmeldung: **18.12.1996**
(21) Anmeldenummer: 96108807.7
(22) Anmeldetag: 01.06.1996
(51) Int. Cl.: A01D 34/70

(54) **Auswurfschacht für Rasenmähwerke**

(30) Priorität: 12.06.1995 US 490004
(71) Anmelder: DEERE & COMPANY, Moline Illinois 61265-8098 (US)
(72) Erfinder: Kuhn, John Boyd, Rubicon, Wisconsin 53078 (US)
(74) Vertreter: Feldmann, Bernhard

(57) **Zusammenfassung**

Bei einem Auswurfschacht (30) für Rasenmähwerke, insbesondere für ein mehrere nebeneinander angeordnete Messer aufweisendes Mähwerk (10), der eine Vorderseite und eine sich von der Oberkante des Mähwerksgehäuses (18) bodenwärts neigende Oberseite aufweist, ist der Auswurfschacht (30) ohne Rückseite ausgebildet, und die Oberseite ist im Bereich ihres rückwärtigen außen liegenden Endes (60) gegenüber ihrem vorne außen liegenden Ende bodenwärts abgeknickt.

## Beschreibung

Die Erfindung bezieht sich auf einen Auswurfschacht für Rasenmähwerke, insbesondere für ein mehrere nebeneinander angeordnete Messer aufweisendes Mähwerk, der eine Vorderseite und eine sich von der Oberkante des Mähwerksgehäuses bodenwärts neigende Oberseite aufweist.

Mäher mit umlaufenden Messern, insbesondere Mäher mit mehreren um vertikale Wellen umlaufenden Sichelmessern, werden zum Schneiden von Gras, Unkraut oder anderer Vegetation eingesetzt. Relativ häufig werden sie zum Schneiden von Gut eingesetzt, dessen Höhe die Höhe des Mähers wesentlich übersteigt, wie zum Beispiel auf Wiesen. Da bei solchen Einsätzen der Gutausstoß sehr groß ist, öffnen die Auswurfschächte derartiger Geräte in der Regel zur Seite. Allerdings kann sich die Auswurföffnung der Auswurfschächte beim Schneiden von hohem Gras odgl. leicht zusetzen, da das hohe noch nicht geschnittene Gras den Gutauswurf blockieren oder zumindest behindern kann. Ist aber der Auswurf einmal verstopft, dann muß die Bedienungsperson den Mäher abstellen, absteigen und den Auswurf reinigen. Verstopfungen können natürlich auch leicht bei Arbeiten nahe an Zäunen, Mauern oder Hauswänden auftreten. Eine Möglichkeit, derartige Probleme halbwegs zu lösen, bestand darin, daß man den Auswurfschacht rückwärtig abwinkelte. Insbesondere, wenn das Mähwerk zwischen den Achsen angeordnet war, entstanden in diesen Fällen Platzprobleme, die sich bei Vielmessermähern noch vergrößerten, da letztere viel größer sind. Bei Vielmessermähern ist außerdem noch ein größerer Luftstrom erwünscht, um die größere Menge Schnittgut auswerfen zu können. Dies wird am besten dadurch erreicht, daß die Messer zueinander quer ausgerichtet werden.

Die mit der Erfindung zu lösende Aufgabe wird in einem Auswurfschacht gesehen, der auch beim Schneiden von hohem Gras odgl. nicht notwendigerweise verstopft und auch den Einsatz von mehreren Schneidmessern erlaubt. Diese Aufgabe ist nach der Erfindung dadurch gelöst worden, daß der Auswurfschacht ohne Rückseite ausgebildet ist und daß die Oberseite im Bereich ihres rückwärtigen außen liegenden Endes gegenüber ihrem vorne außen liegenden Ende bodenwärts abgeknickt ist. Auf diese Weise kann bei Arbeiten in hohem Gras, an Mauern oder Hauswänden, neben Zäunen usw., wenn ein seitlicher Auswurf blockiert oder behindert ist, das geschnittene Gut auf den Boden fallen. Da der Auswurfschacht keine Rückseite aufweist, wird bei einem Vorwärtsfahren des das Mähwerk tragenden Traktors das auf dem Boden liegende Gut sofort freigegeben. Die bodenwärts abgeknickte Oberseite des Auswurfschachtes trägt dazu bei, daß das Schnittgut auch bereits nach rückwärts abgelenkt wird.

Nach einem weiteren Aspekt der Erfindung kann die Oberseite eine vordere Seitenkante und eine äußere Längskante aufweisen, wobei die Längskante mit einer Horizontalen einen größeren Winkel bildet als die Seitenkante. Hiermit wird vorgeschlagen, daß die Oberseite des Auswurfschachtes auf ihrer gesamten Längskante eine stärkere Neigung aufweist. Die stärkere Neigung wiederum bewirkt eine Art Kanalisierung des Schnittgutes in Richtung auf die Vorderseite des Auswurfschachtes.

Die Oberseite des Auswurfschachtes ist ferner derart gestaltet, daß die Vorderseite des Auswurfschachtes einen außen liegenden unteren Endpunkt und die Oberseite des Auswurfschachtes eine untere und außen liegende Spitze, die durch das Zusammentreffen einer äußeren Längskante und einer rückwärtigen Seitenkante der Oberseite entsteht, aufweist, wobei Endpunkt und Spitze in etwa auf derselben vertikalen Höhe und oberhalb der Rotationskreise der Messer liegen. Hierdurch wird sichergestellt, daß die Vorderseite und die Spitze tief genug liegen, daß sie verhindern, daß eine Bedienungs- oder Begleitperson mit ihrem Fuß in den Bereich des Rotationskreises des außen liegenden Messers gelangen könnte. Andererseits liegt die Spitze hoch genug, daß sie den Auswurf durch die Messer nicht behindert, aber wiederum tief genug, damit sie die Kanalförderung begünstigt.

Für einen vorteilhaften seitlichen und rückwärtigen Auswurf wird schließlich noch vorgeschlagen, daß die Vorderseite des Auswurfschachtes eine erste im wesentlichen vertikal gerichtete Fläche bildet, die Oberseite des Auswurfschachtes eine zweite Fläche aufweist, die sich mit einer Kante an die Oberkante der ersten Fläche anschließt, und daß die Oberseite des Auswurfschachtes eine dritte Fläche aufweist, die gegenüber der zweiten Fläche stärker bodenwärts und nach rückwärts mit Bezug auf die Arbeitsrichtung geneigt ist, wobei die zweite und die dritte Fläche zu einem Rechteck zusammengesetzt sind.

Eine besonders große Auswurföffnung im Mähwerksgehäuse wird erreicht, wenn schließlich die Spitze mit Bezug auf die Arbeitsrichtung rückwärtig der Rotationskreise der Messer liegt.

In der Zeichnung ist ein nachfolgend näher erläutertes Ausführungsbeispiel der Erfindung dargestellt. Es zeigt:
- Fig. 1: einen Vielmessermäher in der Draufsicht, wobei der Materialfluß durch Pfeile gekennzeichnet ist,
- Fig. 2: den Auswurfschacht des Mähers nach Fig. 1 in perspektivischer Ansicht,
- Fig. 3: den Auswurfschacht nach Fig. 2 in einer Ansicht von rückwärts und von unten,
- Fig. 4: den Auswurfschacht nach Fig. 2 in einer Ansicht von vorne,
- Fig. 5: eine ähnliche Darstellung wie in Fig. 1, jedoch nur auszugsweise aber mit Abwurftangenten und
- Fig. 6: ein bekanntes Mähwerksgehäuse mit Auswurfschacht.

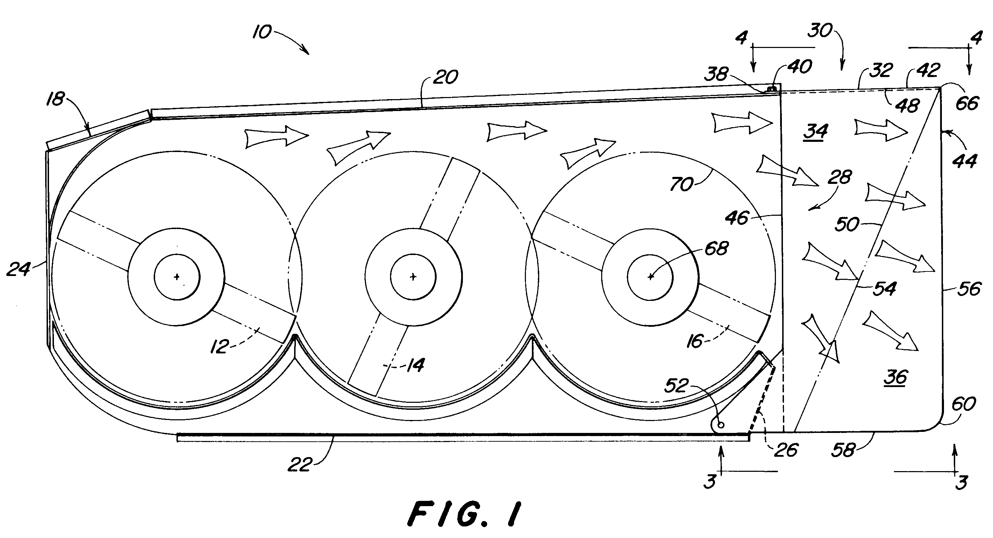

In Fig. 1 der Zeichnung ist ein an einen Kleinschlepper anschließbares Mähwerk 10 mit drei in einer gemeinsamen Querebene liegenden Sichelmessern 12, 14 und 16 erkennbar. Derartige Messer laufen um vertikal gerichtete Achsen um und dienen dem Rasenschnitt. Sie sind in einem Rahmen oder in einem bodenwärts offenen Mähwerksgehäuse 18 angeordnet, das eine vordere vertikale Wand 20, eine rückwärtige vertikale Wand 22 und seitliche vertikale Wände 24 und 26 aufweist. An der rechten Seite des Mähwerksgehäuses 18 befindet sich noch eine Auswurföffnung 28, die dem seitlichen Austritt des geschnittenen Gutes dient. Die Sichelmesser 12, 14 und 16 sind deshalb in Querrichtung zueinander ausgerichtet, damit bei deren Umlauf ein äußerst starker Luftstrom zum Auswerfen des durch die Messer geschnittenen Gutes erzeugt wird. Der Verlauf dieses Luftstroms ist in Fig. 1 durch die Pfeile angedeutet, und man erkennt, daß die Luft an der Vorderseite des Mähwerksgehäuses vorbeistreicht, um dann auf der ganzen Länge der Auswurföffnung 28 und durch einen sich daran anschließenden Auswurfschacht 30 auszutreten.

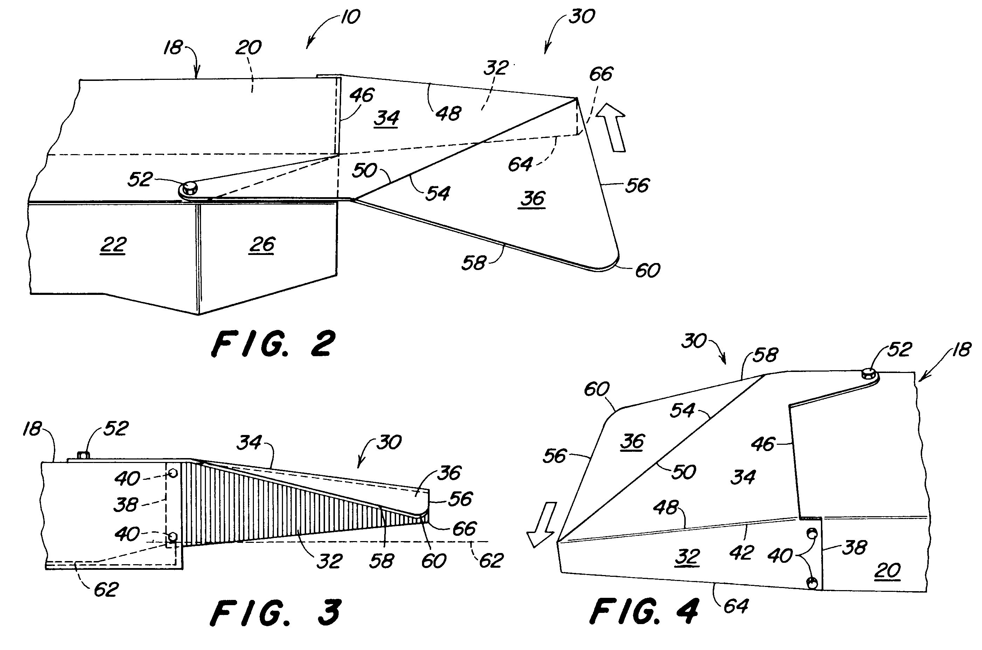

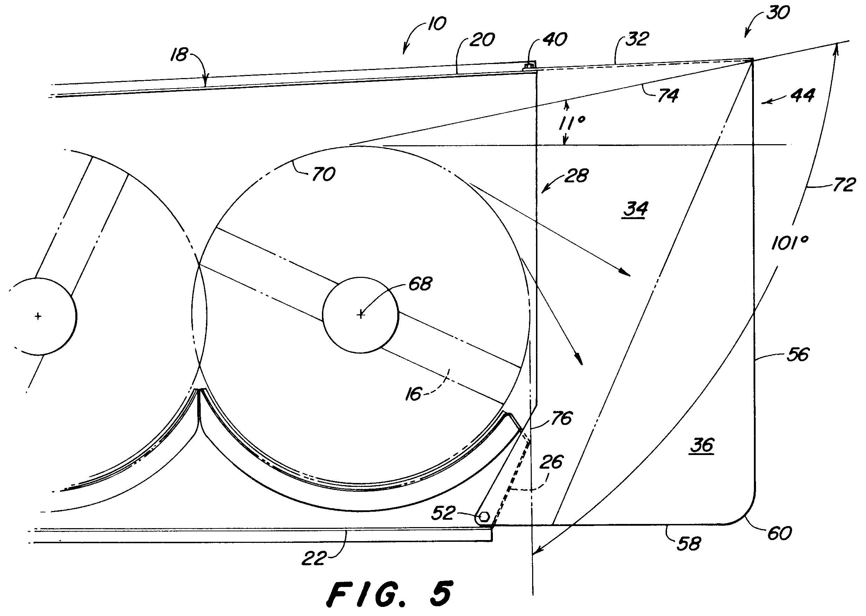

Die Einzelheiten des Auswurfschachtes 30 sind am besten aus den Fig. 2, 3 und 4 zu erkennen, wobei die Pfeile in den Fig. 2 und 4 die Arbeitsrichtung anzeigen. So weist der Auswurfschacht 30 eine erste, eine zweite und eine dritte Fläche 32, 34 und 36 auf. Die erste Fläche 32 bildet die Vorderseite des Auswurfschachtes 30 und ist an die vordere Wand 20 des Mähwerksgehäuses 18 angeschlossen. Dies kann über Schrauben 40 erfolgen. Die vertikale Innenkante der ersten Fläche 32 ist mit 38 und ihre quer verlaufende Oberkante ist mit 42 bezeichnet. Die Oberseite des Auswurfschachtes 30 ist mit der Bezugsnummer 44 versehen. Die Oberseite 44 fällt seitlich nach unten ab und setzt sich aus der zweiten und der dritten Fläche 34 und 36 zusammen. Die zweite Fläche 34 der Oberseite 44 ist teilweise ausgeschnitten und liegt mit einem Zungenabschnitt auf der Oberseite des Mähwerksgehäuses 18 auf. Ihre innere Längskante ist mit 46 und ihre vorn liegende obere Seitenkante ist mit 48 bezeichnet. Die Seitenkante 48 hat etwa die gleiche Länge wie die Oberkante 42 und ist mit dieser bzw. mit der die Vorderseite bildenden ersten Fläche 32 verbunden. Die zweite Fläche 34 endet in einer etwa diagonal verlaufenden Kante 50, an die sich die dritte Fläche 36 anschließt. Die dritte Fläche 36 ist, wie leicht aus der Fig. 2 zu erkennen ist, etwa dreieckförmig ausgebildet und fällt stärker bodenwärts ab als die zweite Fläche 34. Der Zungenabschnitt der zweiten Fläche 34 ist über eine Schraube 52 oder über ein anderes Befestigungsmittel mit dem rückwärtigen Ende des Mähwerksgehäuses 18 verbunden. Während die erste Fläche 32 mit der zweiten Fläche 34 verschweißt sein kann, sind die zweite und dritte Fläche 34 und 36 einstückig ausgebildet. Aus Fig. 5 kann ersehen werden, daß die Oberseite 44 des Auswurfschachtes 30 etwa rechteckig ausgebildet ist, und die dritte Fläche 36 entsteht durch einfaches Abknicken. Andererseits können auch alle Flächen einstückig sein oder in einer anderen geeigneten Form miteinander verbunden sein. Der Übergang der ersten Fläche in die zweite Fläche muß nicht unbedingt scharfkantig sein. Er kann gerundet sein.

Die dritte Fläche 36 schließt sich mit ihrer Schrägkante 54 an die Kante 50 der zweiten Fläche 34 an. Die außen liegende Längskante der dritten Fläche 36 ist mit 56 und die rückwärtige Seitenkante der dritten Fläche 36 ist mit 58 bezeichnet. Die Längskante 56 und die Seitenkante 58 der dritten Fläche 36 laufen in einer Spitze 60 zusammen, die auf einem Niveau unterhalb der Schrägkante 54 liegt, d. h. die Längskante 56 und die Seitenkante 58 laufen von der Schrägkante 54 aus gesehen schräg nach unten. Andererseits liegt die Spitze 60 auf einem Niveau, das noch oberhalb der Rotationsebene 62 (s. Fig. 3) der Messer 12, 14, 16 liegt.

Aus Fig. 4 kann man erkennen, daß die erste Fläche 32 in Form eines liegenden Trapezes ausgebildet ist, d. h. die Oberkante 42 läuft von ihrem Anschluß an das Mähwerksgehäuse 18 aus schräg nach unten, während die Unterkante 54 der ersten Fläche 32 von ihrem Anschluß an das Mähwerksgehäuse 18 aus schräg nach oben verläuft. Die Eckkante, die die Unterkante 64 mit der nicht bezeichneten vertikalen Außenkante der ersten Fläche 32 bildet, ist mit 66 bezeichnet. Die Eckkante 66 liegt auf etwa derselben Höhe wie die Spitze 60, also oberhalb der Ebene 62 der Rotationskreise der Sichelmesser.

In Fig. 5 ist der rechte Teil des Mähwerksgehäuses 18 mit dem äußerst rechts unmittelbar vor der Auswurföffnung 28 liegenden Sichelmesser 16 und dem Auswurfschacht 30 schematisch dargestellt. Das Messer 16 läuft um seine Drehachse 68 um, und der Rotationskreis 70 ist in gestrichelten Linien angedeutet. Die Auswurföffnung 28 des Mähwerksgehäuses reicht dabei von der ersten Fläche 32 bis zu der relativ kurzen rechten Seitenwand 26 des Mähwerksgehäuses 18. Die Auswurföffnung ist damit sehr groß, so daß das geschnittene Gut in einem sehr breiten Schwad 72 seitlich und auch nach rückwärts ausgeworfen werden kann. Die Auswurfbreite wird durch die Abwurftangenten 74 und 76 bestimmt.

Das in Fig. 1 wiedergegebene Mähwerk 10 ist in der Regel zwischen den Achsen eines Rasentraktors aufgehängt. Es kann aber auch vor den Vorderrädern oder an der Rückseite des Rasentraktors angebaut sein. Bei dem Mähen des Rasens entsteht durch die umlaufenden Sichelmesser in dem Mähwerksgehäuse eine starke Luftströmung, die in einen Luftstrom gezwungen wird, wie er durch die Pfeile in Fig. 1 angedeutet ist. Dieser Luftstrom streicht im wesentlichen an der Vorderseite des Gehäuses 18 vorbei und reißt das geschnittene Gut mit. Die Sichelmesser laufen im Uhrzeigerdrehsinn um und, da sich ihre Rotationskreise überschneiden können, ist ihr Drehtakt entsprechend verschoben. In jedem Fall erzeugen sie den besagten Luftstrom, der das Gras oder ein anderes geschnittenes Gut mitreißt und durch die Auswurföffnung und den Auswurfschacht ausbläst.

Da sich die Ebene der Rotationskreise der Messer unterhalb der tiefsten Stellen des Auswurfschachtes 30 befindet, kann das Material unterhalb dieser Stellen und innerhalb des durch die Tangenten 74 und 76 begrenzten Schwads 72 ausgeworfen werden.

In Fig. 5 ist ferner angedeutet, daß das abgemähte Gut durch die Auswurföffnung 28 vermittels des Messers 16 entlang der Tangente 74 ausgeworfen werden kann. Da der Auswurfschacht 30 an seiner außen liegenden Längsseite offen ist, und sich die Vorderseite oder erste Fläche 32 des Auswurfschachtes 30 unmittelbar an die vordere Wand 20 des Mähwerksgehäuses 18 anschließt, beträgt der Winkel, den die Tangente 74 mit einer quer verlaufenden Geraden bildet, immer noch etwa 11°, wenn die Tangente 74 an der vorderen oder in Fig. 5 oben liegenden Kante des Auswurfschachtes vorbeiläuft. Der Auswurfschacht 30 ist auch an seiner Rückseite vollkommen offen, und Material kann auch rückwärtig bis zu der in Längsrichtung verlaufenden Tangente 76 austreten. Dies ist einmal durch die Formgebung der Oberseite des Auswurfschachtes 30 bedingt, jedoch erfolgt ein vermehrter rückwärtiger Austritt, wenn Hindernisse dem seitlichen Austritt entgegenstehen. In jedem Fall kann das Messer 16 das geschnittene Gut in einem Winkel von 101° auswerfen, wobei dieser Winkel zwischen den Tangenten 74 und 76 gebildet ist. Die bodenwärts aber auch nach rückwärts geneigte Ausbildung der Oberseite 44 des Auswurfschachtes 30 dient aber auch als Schutz gegen nach oben fliegende Steine oder andere Fremdkörper. Außerdem ist die erste Fläche 32 des Auswurfschachtes 30 relativ weit nach unten geführt, was auch für die Spitze 60 zutrifft. Hierdurch wird verhindert, daß eine Person mit ihrem Fuß in die Nähe des Rotationskreises 70 des rechts außen liegenden Messers 16 gelangen könnte.

Der Auswurfschacht 30 ist auch nach unten hin offen, und bei Arbeiten im hohen Gras oder in der Nähe von Zäunen oder anderen Hindernissen erlaubt es der offene Auswurfschacht, daß Gut, welches am äußeren seitlichen Auslaß des Auswurfschachtes am Austritt gehindert wird, einfach auf den Boden fällt. Da eine rückwärtige Wand nicht vorgesehen ist, streicht dann die rückwärtige Seitenkante 58 einfach über das Gut, wenn sich der Traktor nach vorne fortbewegt. Aus dem Vorstehenden folgt, daß Gut, welches seitlich nicht aus dem Auswurfschacht ausgeworfen werden kann, den Auswurfschacht nicht verstopft, da die rückwärtige Seitenkante dann einfach über dieses Gut hinwegstreicht.

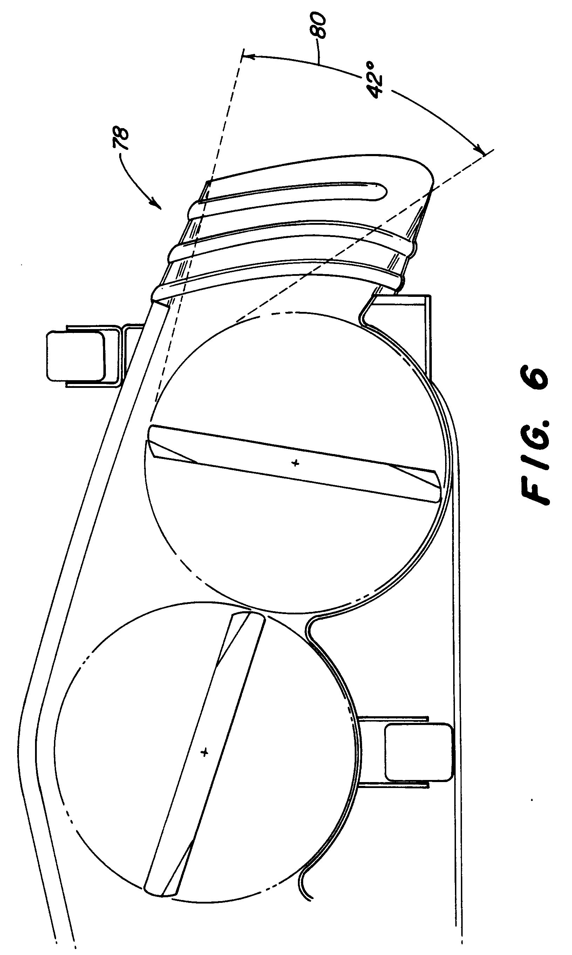

Im Gegensatz hierzu ist bei bekannten Auswurfschächten 78, wie beispielsweise bei dem in Fig. 6 dargestellten, der ausgeworfene Schwad 80 wesentlich schmaler als bei der vorliegenden Erfindung. Bei derartigen Auswurfschächten beträgt der Auswurfwinkel nicht mehr als 42°. Hinzu kommt, daß diese bekannten Auswurfschächte nach rückwärts gebogen sind, und es nicht ermöglichen, das am seitlichen Austritt gehindertes Gut rückwärtig an dem Auswurfschacht austreten kann, wenn der Traktor vorwärts fährt.

## Patentansprüche

1. Auswurfschacht für Rasenmähwerke, insbesondere für ein mehrere nebeneinander angeordnete (12, 14, 16) Messer aufweisendes Mähwerk (10), der eine Vorderseite und eine sich von der Oberkante des Mähwerksgehäuses (18) bodenwärts neigende Oberseite (44) aufweist, dadurch gekennzeichnet, daß der Auswurfschacht (30) ohne Rückseite ausgebildet ist, und daß die Oberseite (44) im Bereich ihres rückwärtigen außen liegenden Endes (60) gegenüber ihrem vorne außen liegenden Ende bodenwärts abgeknickt ist.

2. Auswurfschacht nach Anspruch 1, dadurch gekennzeichnet, daß die Oberseite (44) eine vordere Seitenkante (48) und eine äußere Längskante (56) aufweist, wobei die Längskante (56) mit einer Horizontalen einen größeren Winkel bildet als die Seitenkante (48).

3. Auswurfschacht nach Anspruch 1, dadurch gekennzeichnet, daß die Vorderseite des Auswurfschachtes (30) einen außen liegenden unteren Endpunkt (66) und die Oberseite (44) des Auswurfschachtes eine untere und außen liegende Spitze (60), die durch das Zusammentreffen einer äußeren Längskante (56) und einer rückwärtigen Seitenkante der Oberseite (44) entsteht, aufweist, wobei Endpunkt (66) und Spitze (60) in etwa auf derselben vertikalen Höhe und oberhalb der Rotationskreise (70) der Messer (12, 14, 16) liegen.

4. Auswurfschacht nach einem oder mehreren der vorherigen Ansprüche, dadurch gekennzeichnet, daß die Vorderseite des Auswurfschachtes (30) eine erste im wesentlichen vertikal gerichtete Fläche (32) bildet, die Oberseite (44) des Auswurfschachtes (30) eine zweite Fläche (34) aufweist, die sich mit einer Kante (48) an die Oberkante (42) der ersten Fläche (32) anschließt, und daß die Oberseite (44) des Auswurfschachtes (30) eine dritte Fläche (36) aufweist, die gegenüber der zweiten Fläche (34) stärker bodenwärts und nach rückwärts mit Bezug auf die Arbeitsrichtung geneigt ist, wobei die zweite und die dritte Fläche (34, 36) zu einem Rechteck zusammengesetzt sind.

5. Auswurfschacht nach Anspruch 3, dadurch gekennzeichnet, daß die Spitze (60) mit Bezug auf die Arbeitsrichtung rückwärtig der Rotationskreise (70) der Messer (12, 14, 16) liegt.
